# EUROPÄISCHE PATENTANMELDUNG

(11) **EP 1 001 583 A2**
(43) Veröffentlichungstag der Anmeldung: **17.05.2000**
(21) Anmeldenummer: 99440308.7
(22) Anmeldetag: 10.11.1999
(51) Int. Cl.: H04L 29/06, H04L 12/00

(54) **Verfahren zum dynamisch-adaptiven Einstellen von Übertragungsparametern und zugehörige Komponenten**

(30) Priorität: 11.11.1998 DE 19851930
(71) Anmelder: ALCATEL, 75008 Paris (FR)
(72) Erfinder: Faier, Wolfgang, 71706 Markgröningen-2 (DE); Zahn, Siglinde, 70825 Korntal (DE)
(74) Vertreter: Rausch, Gabriele, Dr.

(57) **Zusammenfassung**

Bei einem Verfahren zum Übertragen von Daten zwischen zwei Datenübertragungseinheiten (DTU1, DTU2), die miteinander über mindestens einen Übertragungskanal (c1, ..., cn) verbunden sind, werden vor der eigentlichen Datenübertragung von der sendenden (ersten) Datenübertragungseinheit (DTU1) an die empfangende (zweite) Datenübertragungseinheit (DTU2) folgende Schritte durchgeführt:
a) Ermitteln von ersten Übertragungsparametern (P1) abhängig davon, in welchem Umfang Betriebsmittel der ersten Datenübertragungseinheit (DTU1) für die geplante Datenübertragung zur Verfügung stehen;
b) Ermitteln von zweiten Übertragungsparametern (P2) abhängig davon, in welchem Umfang Betriebsmittel der zweiten Datenübertragungseinheit (DTU2) für die geplante Datenübertragung zur Verfügung stehen;
c) Übertragen der Übertragungsparameter (P2; P1) von einer Datenübertragungseinheit (DTU2; DTU1) zur anderen Datenübertragungseinheit (DTU1; DTU2);
d) Ermitteln derjenigen für die eigentliche Datenübertragung einzustellenden Übertragungsparameter (P'), mit denen die verfügbare Übertragungsstrecke (TP) bestmöglich ausgenutzt wird; und
e) Einstellen der Übertragungsstrecke (TP) für die Datenübertragung entsprechend den ermittelten Übertragungsparametern (P').

## Beschreibung

Die Erfindung betrifft ein Verfahren zum Übertragen von Daten zwischen zwei Datenübertragungseinheiten, die miteinander über mindestens einen Übertragungskanal verbunden sind, wobei zwischen beiden Datenübertragungseinheiten vor der eigentlichen Datenübertragung Übertragungsparameter für die eigentliche Datenübertragung ausgehandelt werden, sowie entsprechende Komponenten dafür.

Ein derartiges Übertragungsverfahren ist beispielsweise durch die EP 0 841 771 A1 bekanntgeworden.

Um Daten bestmöglich, z.B. schnellstmöglich und mit möglichst wenigen Übertragungsfehlern, zu übertragen, müssen die sendende und empfangende Datenübertragungseinheit optimal aneinander angepaßt sein. Im Falle unterschiedlich konfigurierter Datenübertragungseinheiten, insbesondere bei inhomogenen oder heterogenen Systemen wie z.B. bei einem 286-Board und einem Pentium-Board, wird eine solche Anpassung zwar vorgenommen, ist aber nicht in jedem Fall auch die beste. Eine optimale Ausnutzung der Übertragungskapazität hängt offensichtlich von den verfügbaren Kanälen, z.B. von einem PCM-Übertragungskanal (PCM: Pulse Code Modulation) zwischen den Computern ab sowie von der Hardware und Software der miteinander kommunizierenden Computer. Die Übertragungskapazität kann erhöht werden, indem parallele Übertragungskanäle genutzt werden.

Zur Steigerung der Übertragungsrate ist es aus dem Artikel "An application-level technique for faster transmission of large images on the Internet" von L.R. Long et al. in Proceeding of the SPIE- The International Society for Optical Engineering (1995) Vol. 2417, Seiten 116-129, bereits bekannt, ein großes Datenpaket nicht auf einem einzigen logischen Übertragungskanal zu übertragen, sondern die Daten zuvor zu segmentieren, jedes Datensegment auf einem eigenen Übertragungskanal zu übertragen und dann die einzelnen Segmente wieder zu einem Datenpaket zusammenzusetzen.

In der FR 2,719,681 wird die Verwendung eines vorbestimmten Protokolls vorgeschlagen, um auf einem Übertragungskanal mit Mehrfach-Unterkanälen Datenblöcke zu übertragen. Die Datenblöcke werden in kleinere Segmente unterteilt und auf den kapazitätsmäßig begrenzten Unterkanälen übertragen, wobei eine dynamische Konfiguration von Anschlüssen (Ports) und der Übertragungskapazität der Unterkanälen erfolgt.

Weiterhin ist es aus der US 5,606,561 bekannt, ein zu übertragendes Datenpaket in eine der Zahl von verfügbaren Zeitschlitzen entsprechende Anzahl von Datensegmenten aufzuteilen. Die Datensegmente werden auf unterschiedlichen Zeitschlitzen übertragen und dann zu einem gemeinsamen Datenpaket zusammengesetzt.

Schließlich ist aus der eingangs genannten EP 0 841 771 A1 ein Initialisierungsprotokoll für adaptive Datenübertragungsgeschwindigkeiten bekannt, mittels dem die Datenübertragungsgeschwindigkeit für eine künftige Datenübertragung "ausgehandelt" wird. Dazu schlägt eine der beiden Datenübertragungseinheiten eine Vielzahl von Datenübertragungsgeschwindigkeiten vor, aus denen dann die andere Datenübertragungseinheit eine auswählt. Dieses Aushandeln erfolgt allerdings insofern statisch, als daß nur die größte gemeinsame Übertragungsgeschwindigkeit ermittelt wird, mit der in jedem Fall, d.h. auch trotz ansonsten maximaler Auslastung der beiden Datenübertragungseinheiten, eine sichere Datenübertragung immer noch sichergestellt ist. Bei nicht ausgelasteten Datenübertragungseinheiten ist die ausgehandelte Übertragungsgeschwindigkeit dann allerdings nicht unbedingt auch die optimale.

Der Erfindung liegt daher die Aufgabe zugrunde, ein Verfahren der eingangs genannten Art derart weiterzubilden, daß die Datenübertragung bestmöglich angepaßt an die aktuellen Gegebenheiten, d.h. mit größtmöglicher Effizienz, erfolgen kann, sowie entsprechende Komponenten dafür bereitzustellen.

Diese Aufgabe wird bei dem eingangs genannten Verfahren dadurch gelöst, daß beim Aushandeln folgende Schritte durchgeführt werden:
a) Ermitteln von ersten Übertragungsparametern (P1) abhängig davon, in welchem Umfang Betriebsmittel der sendenden (ersten) Datenübertragungseinheit (DTU1) für die geplante Datenübertragung zur Verfügung stehen;
b) Ermitteln von zweiten Übertragungsparametern (P2) abhängig davon, in welchem Umfang Betriebsmittel der empfangenden (zweiten) Datenübertragungseinheit (DTU2) für die geplante Datenübertragung zur Verfügung stehen;
c) Übertragen der Übertragungsparameter (P2; P1) von der einen Datenübertragungseinheit (DTU2; DTU1) zur anderen Datenübertragungseinheit (DTU1; DTU2);
d) Ermitteln derjenigen für die eigentliche Datenübertragung einzustellenden Übertragungsparameter (P'), mit denen die verfügbare Übertragungsstrecke (TP) bestmöglich ausgenutzt wird; und
e) Einstellen der Übertragungsstrecke (TP) für die eigentliche Datenübertragung entsprechend den ermittelten Übertragungsparametern (P').

Der Begriff "Betriebsmittel" umfaßt in diesem Zusammenhang sowohl spezifische Leistungsmerkmale der jeweiligen Datenübertragungseinheit, wie z.B. die vorhandene Hardware, der vorhandene Speicherplatz (z.B. Arbeitsspeicher RAM), die vorhandene Software (z.B. Betriebssystem), die Leistungsfähigkeit des Prozessors usw., sowie Leistungsmerkmale für die Übertragung, wie z.B. die Anzahl der belegbaren/verfügbaren Übertragungskanäle, die maximal mögliche Übertragungsgeschwindigkeit oder die Übertragungsmethode (mit oder ohne Übertragungshilfsmittel).

Insbesondere werden in Schritt d) auch die Anzahl der für die geplante Datenübertragung verfügbaren Übertragungskanäle sowie die Segmentgröße für eine segmentierte Datenübertragung als jeweils einer der einzustellenden Übertragungsparameter ermittelt.

Um die verfügbare Übertragungskapazität bestmöglich zu nutzen, handeln vorher die Computer ihre aktuellen Übertragungsparameter aus, z.B. welche und wieviele Kommunikationskanäle oder -wege genutzt werden sollen, wieviel an Computer-Performance (Leistungsfähigkeit) verfügbar ist, wieviel an Hardware-Ressourcen für die Übertragungsverarbeitung zur Verfügung gestellt wird und wie die zu übertragenden Daten zu segmentieren sind.

Durch diesen Austausch ihrer aktuell verfügbaren Kommunikationsmerkmale wie z.B. ihrer Rechnerleistung (Prozessorart und -takt, RAM usw.) können die Datenübertragungseinheiten die relevanten Übertragungsparameter vor Beginn der eigentlichen Übertragung individuell aushandeln. Die Übertragungsleistung, d.h. Geschwindigkeit, Parallelität, Segmentierung, Anzahl der Segmente in Folge usw., werden vor der eigentlichen Übertragung berechnet. Das zugehörige "Verhandlungs"-Protokoll sollte einfach sein, um möglichst bald mit der eigentlichen Übertragung beginnen zu können. Diese Festlegung der relevanten Übertragungsparameter anhand der aktuellen Software-Version, der aktuellen Hardware-Möglichkeit oder von sonstigen Übertragungszwängen ermöglicht die automatische dynamisch-adaptive Anpassung der Übertragungsparameter von Rechnern mit unterschiedlicher Performance in verschiedenen Systemen (heterogene Netze). Durch diese automatische Adaption läßt sich die erforderliche Übertragungszeit um einen wesentlichen Faktor gegenüber heutigen Übertragungsverfahren reduzieren.

Nach Bestimmen der Übertragungsparameter startet dann der sendende Computer die eigentliche Übertragung, bei der die Daten, in Segmente aufgeteilt, gesendet werden. Dies ermöglicht die bestmögliche Ausnutzung begrenzter Übertragungskapazität durch Parallelisierung unter Berücksichtigung der jeweiligen Rechnerfähigkeiten. Dabei ist die Segmentierung auch abhängig von der Nutzlast, und die Parallelität ist insbesondere bei geringer Leistung der Übertragungswege zu bevorzugen.

Nach einer Unterbrechung der Übertragung kann diese mit den zuvor ausgehandelten, eingestellten Übertragungsparametern wiederaufgenommen werden.

In einer weiteren Verfahrensausgestaltung werden während der eigentlichen Datenübertragung, insbesondere bei Auftreten eines Übertragungsfehlers, die eingestellten Übertragungsparameter überprüft und bei Bedarf neu ermittelt. Während der eigentlichen Übertragung können die Übertragungsparameter auf ein statistisches Auftreten von Übertragungsfehlern und durch eine Änderung der aktuellen verfügbaren Übertragungskanäle und -wege eingestellt werden. Sollten trotz der zu Beginn der Kommunikation stattgefundenen Aushandlung Übertragungsfehler auftreten, kann die weitere Übertragung unterhalb der ursprünglich ausgehandelten Maximalgrenzen erfolgen.

Vorzugsweise werden die eingestellten Übertragungsparameter gespeichert, damit z.B. bei einer Datenübertragung von der zweiten an die erste Datenübertragungseinheit ein sofortiger Zugriff auf diese optimalen Übertragungsparameter möglich ist. Wenn z.B. die Übertragungsparameter der sendenden ersten Datenübertragungseinheit in der empfangenden zweiten Datenübertragungseinheit gespeichert werden, kann eine Rückübertragung von der zweiten an die erste Datenübertragungseinheit mit diesen gespeicherten Übertragungsparameter erfolgen, ohne daß diese zuvor von der zweiten Datenübertragungseinheit erst abgefragt werden müssen. So ist die Übertragungsstrecke bidirektional optimal eingestellt.

Die Erfindung betrifft ferner auch die zum Durchführen der jeweiligen Schritte geeigneten Datenübertragungseinheiten, und zwar sowohl die zum Senden als auch die zum Empfangen von Daten, sowie auch eine Vermittlungsstelle mit mindestens einer solchen Datenübertragungseinheit.

Schließlich betrifft die Erfindung auch noch ein Programm-, Software-, Rechnermodul zum Durchführen des oben genannten Verfahrens, wobei das Modul in einer Datenübertragungseinheit vorgesehen sein kann. Unter einem Programm wird in diesem Zusammenhang eine Folge von Befehlen, die von einem Prozessor ausgeführt werden, verstanden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: schematisch ein Ausführungsbeispiel mit zwei Datenübertragungseinheiten, zwischen denen Daten übertragen werden können; und
- Fig. 2: beispielhaft ein Ablaufdiagramm eines vor der eigentlichen Datenübertragung in den Datenübertragungseinheiten ablaufenden Programms.

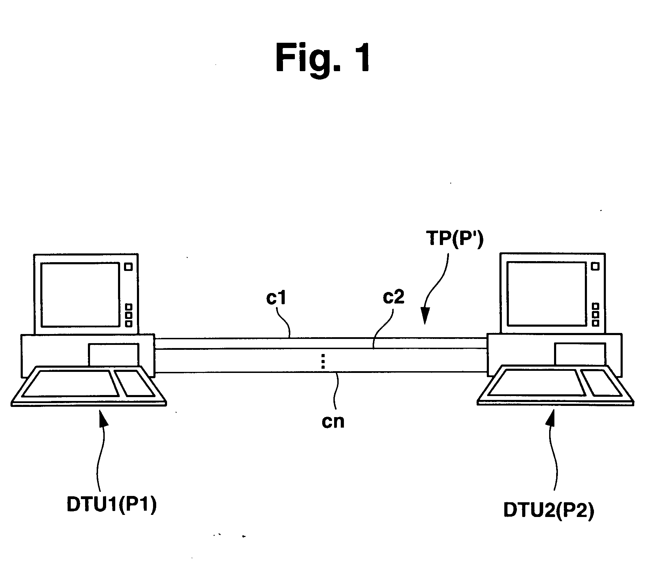

In Fig. 1 sind zwei Datenübertragungseinheiten (data transmission unit) DTU1 und DTU2 gezeigt, die miteinander über mindestens einen Übertragungskanal c1, c2, ..., cn verbunden sind. Im gezeigten Ausführungsbeispiel sind die Datenübertragungseinheiten als Computer dargestellt.

Vor einer geplanten Datenübertragung von der (sendenden) ersten Datenübertragungseinheit DTU1 an die (empfangende) zweite Datenübertragungseinheit DTU2 ermittelt zunächst jede Datenübertragungseinheit ihre verfügbaren Betriebsmittel in Form von Übertragungsparametern P1 und P2, wobei die zweite Datenübertragungseinheit DTU2 ihre Übertragungsparameter P2 an die erste Datenübertragungseinheit DTU1 weiterleitet. Aus den Übertragungsparametern P1, P2 ermittelt dann die erste Datenübertragungseinheit DTU1 diejenigen Übertragungsparameter P', mitdenen die verfügbare Übertragungsstrecke (transmission path) TP bestmöglich ausgenutzt werden kann. Zu diesen "ausgehandelten" Übertragungsparametern P' zählt insbesondere auch die Anzahl n der für die eigentliche Datenübertragung nutzbaren Übertragungskanäle c1 bis cn, um bei n>1 die Daten auf mehreren verfügbaren Übertragungskanälen parallel übertragen zu können.

Es ist auch möglich, daß die zweite Datenübertragungseinheit DTU2 die Übertragungsparameter P1 der ersten Datenübertragungseinheit DTU1 für ein späteres Senden von Daten an die erste Datenübertragungseinheit DTU1 speichert, so daß die zweite Datenübertragungseinheit DTU2 dann diese Übertragungsparameter P1 der ersten Datenübertragungseinheit DTU1 nicht erst abfragen muß.

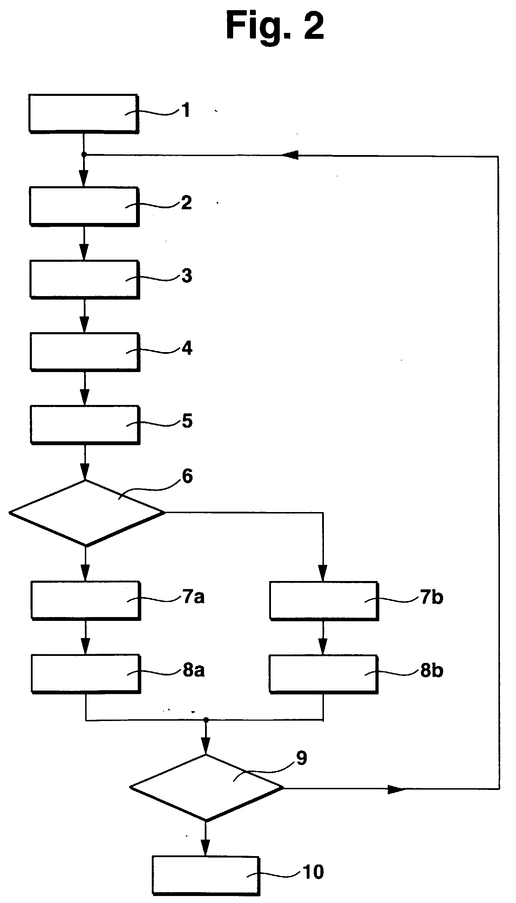

In Fig. 2 ist beispielhaft ein Ablaufdiagramm (Programm) für das in Fig. 1 beschriebene Übertragungsverfahren gezeigt. Nach dem Programmstart (Schritt 1) werden in Schritt 2 von der ersten Datenübertragungseinheit DTU1 erste Übertragungsparameter P1 ermittelt abhängig davon, in welchem Umfang Betriebsmittel der ersten Datenübertragungseinheit DTU1 für die anstehende Datenübertragung zur Verfügung stehen. Entsprechend werden auch bei der zweiten Datenübertragungseinheit DTU2 zweite Übertragungsparameter P2 ermittelt abhängig davon, in welchem Umfang dort Betriebsmittel für die anstehende Datenübertragung zur Verfügung stehen (Schritt 3). Die zweiten Übertragungsparameter P2 werden von der zweiten Datenübertragungseinheit DTU2 an die erste Datenübertragungseinheit DTU1 übermittelt (Schritt 4), die anhand den ersten und zweiten Übertragungsparametern P1, P2 diejenigen Übertragungsparameter P' ermittelt (Schritt 5), mit denen die verfügbare Übertragungsstrecke TP bestmöglich für die geplante Datenübertragung ausgenutzt werden kann.

Dann wird in Schritt 6 geprüft, ob für die geplante Datenübertragung eine parallele Übertragung möglich ist, d.h., ob mehr als ein Übertragungskanal zur Verfügung steht. Bei nur einem verfügbaren Übertragungskanal wird das Programm mit Schritt 7a fortgesetzt, in welchem der eine Übertragungskanal bzw. die ausgewählte Übertragungsstrecke TP entsprechend den ermittelten Übertragungsparametern P' eingestellt wird. Die eigentliche Datenübertragung kann beginnen (Schritt 8a), wobei die Daten vorzugsweise segmentiert übertragen werden. Ergibt die Prüfung in Schritt 6, daß mehrere Übertragungskanäle zur Verfügung stehen, verzweigt das Programm zu Schritt 7b, in welchem diese mehreren Übertragungskanäle bzw. die ausgewählte Übertragungsstrecke TP entsprechend den ermittelten Übertragungsparametern P' eingestellt werden. Die eigentliche Datenübertragung kann beginnen (Schritt 8b), wobei auch hier die Daten vorzugsweise segmentiert übertragen werden.

Sofern bei der Datenübertragung ein Übertragungsfehler auftritt, was in Schritt 9 abgefragt wird, verzweigt das Programm zurück zu Schritt 2, um die eingestellten Übertragungsparameter P' zu überprüfen und für die weitere Übertragung möglicherweise neu einzustellen. Ein Übertragungsfehler kann z.B. aufgrund einer gestörten Übertragungsstrecke auftreten, oder weil sich die Eigenschaften des Übertragungspartners z.B. wegen einer neuen Software- oder Hardware-Version geändert haben. Dann kann z.B. der ersten Datenübertragungseinheit DTU1 rücksignalisiert werden, daß neue Übertragungsparameter erforderlich sind.

Wenn kein Übertragungsfehler auftritt, wird die Übertragung fortgesetzt (Schritt 10).

## Patentansprüche

1. Verfahren zum Übertragen von Daten zwischen zwei Datenübertragungseinheiten (DTU1, DTU2), die miteinander über mindestens einen Übertragungskanal (c1, ..., cn) verbunden sind, wobei zwischen beiden Datenübertragungseinheiten (DTU1, DTU2) vor der eigentlichen Datenübertragung Übertragungsparameter (P') für die eigentliche Datenübertragung ausgehandelt werden,
dadurch gekennzeichnet,
daß beim Aushandeln folgende Schritte durchgeführt werden:
a) Ermitteln von ersten Übertragungsparametern (P1) abhängig davon, in welchem Umfang Betriebsmittel der sendenden (ersten) Datenübertragungseinheit (DTU1) für die geplante Datenübertragung zur Verfügung stehen;
b) Ermitteln von zweiten Übertragungsparametern (P2) abhängig davon, in welchem Umfang Betriebsmittel der empfangenden (zweiten) Datenübertragungseinheit (DTU2) für die geplante Datenübertragung zur Verfügung stehen;
c) Übertragen der Übertragungsparameter (P2; P1) von der einen Datenübertragungseinheit (DTU2; DTU1) zur anderen Datenübertragungseinheit (DTU1; DTU2);
d) Ermitteln derjenigen für die eigentliche Datenübertragung einzustellenden Übertragungsparameter (P'), mit denen die verfügbare Übertragungsstrecke (TP) bestmöglich ausgenutzt wird; und
e) Einstellen der Übertragungsstrecke (TP) für die eigentliche Datenübertragung entsprechend den ermittelten Übertragungsparametern (P').

2. Verfahren nach Anspruch 1, dadurch gekennzeichnet, daß in Schritt d) auch die Anzahl (n) der für die eigentliche Datenübertragung verfügbaren Übertragungskanäle (c1, ..., cn) als einer der einzustellenden Übertragungsparameter (P') ermittelt wird.

3. Verfahren nach Anspruch 1 oder 2, dadurch gekennzeichnet, daß in Schritt d) auch die Segmentgröße für eine segmentierte Datenübertragung als einer der einzustellenden Übertragungsparameter (P') ermittelt wird.

4. Verfahren nach einem der vorhergehenden Ansprüche, dadurch gekennzeichnet, daß während der eigentlichen Datenübertragung, insbesondere bei Auftreten eines Übertragungsfehlers, die eingestellten Übertragungsparameter (P') überprüft und bei Bedarf neu ermittelt werden.

5. Verfahren nach einem der vorhergehenden Ansprüche, dadurch gekennzeichnet, daß die eingestellten Übertragungsparameter (P') in mindestens einer der beiden Datenübertragungseinheiten (DTU1, DTU2) gespeichert werden.

6. Datenübertragungseinheit (DTU1) zum Senden von Daten, mit Mitteln zum Durchführen zumindest der Schritte a), d) und e) des Verfahrens nach einem der Ansprüche 1 bis 5.

7. Datenübertragungseinheit (DTU2) zum Empfangen von Daten, mit Mitteln zum Durchführen zumindest der Schritte b), c) und e) des Verfahrens nach einem der Ansprüche 1 bis 5.

8. Vermittlungsstelle mit mindestens einer Datenübertragungseinheit (DTU1) nach Anspruch 6.

9. Programm-, Software-, Rechnermodul zum Durchführen des Verfahrens nach einem der Ansprüche 1 bis 5.
